# EUROPEAN PATENT APPLICATION

(11) **EP 4 578 886 A1**
(43) Date of publication of application: **02.07.2025**
(21) Application number: 23307398.0
(22) Date of filing: 27.12.2023
(51) Int. Cl.: C08G 8/12, C08L 61/06, C09K 8/524, C10L 1/14

(54) **4-(2-ALKOXYETHYL)PHENOL ALDEHYDE RESINS AS ASPHALTENE DISPERSANT IN PETROLEUM PRODUCTS**

(71) Applicant: TotalEnergies OneTech, 92400 Courbevoie (FR)
(72) Inventor: MONDKAR, Hemant Sunanda Surendra, 69360 SOLAIZE (FR); TORT, FREDERIC, 69360 SOLAIZE (FR)
(74) Representative: Casalonga

(57) **Abstract**

The present invention deals with a resin obtainable from at least one 4-(2-(alkoxy)ethyl)phenol compound with at least one aldehyde, and a composition comprising said resin.

The instant invention further pertains to the use of such a composition as an additive in a petroleum product such as a crude oil or any product which results therefrom by any refining and/or extraction process. The additive composition of the invention is especially useful for dispersing asphaltenes in petroleum products.

In addition, the invention aims at providing a petroleum product comprising such an additive composition, as well as a method for preventing the precipitation of asphaltenes present in a petroleum product, wherein an additive composition as defined herein is added.

## Description

The present invention deals with a resin obtainable from at least one 4-(2-alkoxyethyl)phenol compound with at least one aldehyde, and a composition comprising said resin.

The instant invention further pertains to the use of such a composition as an additive in a petroleum product such as a crude oil or any product which results therefrom by any refining and/or extraction process. The additive composition of the invention is especially useful for dispersing asphaltenes in petroleum products.

In addition, the invention aims at providing a petroleum product comprising such an additive composition, as well as a method for preventing the precipitation of asphaltenes present in a petroleum product, wherein an additive composition as defined herein is added.

### PRIOR ART AND BACKGROUND OF THE INVENTION

Crude oils mainly contain two categories of products: maltenes and asphaltenes. The maltenes mainly contain oils (saturated hydrocarbon compounds and aromatics) and resins. The asphaltenes comprise highly polar entities which have a tendency to combine together to form agglomerates. They constitute the heaviest component of crude oils. Asphaltenes are composed of molecules comprising fragments of polycycles, polyaromatics, short aliphatic chains, heteroatoms, such as N, O or S, and metals (for example Ni, V or Fe). They are insoluble in alkanes, such as n-pentane or n-heptane, but they are soluble in aromatic solvents, such as toluene or xylene. The interaction of asphaltenes with their environment is a complex phenomenon which is difficult to control.

The asphaltenes are generally present in crude oils as well as in many products derived from the refining thereof, such as in particular heavy oils and residues. They have a high tendency to precipitate in petroleum production wells, in pipelines and more generally on the surface of any installation in contact with a product containing them.

The precipitation of asphaltenes shall be avoided all the more that it can lead to problems of clogging of filters and plugging of pipes. This phenomenon results in a loss of productivity and a reduction in the transportation flows. Without a treatment which makes it possible to prevent such precipitations, the frequency of the operations for the maintenance of the production sites of crude oils as well as of the transportation equipment and handling plants represents a major economic burden.

Several factors can promote the precipitation of asphaltenes in a petroleum product, such as a rise in pressure, a rise in temperature, variations in composition, in particular due to injection of material into the crude oil or into the derived product, for example the arrival of a drilling mud in the reservoir, a mixture of crude oils or an injection of gas or of another fluid.

The composition of the crude oils and of the derived products also influences the phenomenon of precipitation of the asphaltenes: light oils, exhibiting a low content of asphaltenes, are rich in alkanes in which asphaltenes are not very soluble, and the latter have a tendency to precipitate from this medium. Heavy oils, rich in asphaltenes, comprise high amounts of intermediate compounds which are good solvents for asphaltenes and delay or prevent their precipitation. However, in crude oils, the precipitation of asphaltenes often brings about the coprecipitation of other components, such as resins or waxes.

In underground formations, the injection of fluids and the application of high pressures result in the adsorption of residues on the rock and a decrease in the permeability which can trigger reservoir blockage. During the refining operations, the rise in temperature applied to the crude oils causes problems of coking and of fouling in the distillation columns and on the heat exchangers, and also deactivation of catalysts. During the transportation of the oil products (crude and refined), the pressure applied to the fluid can lead to the sealing of the pipes. These phenomena are largely attributable to the precipitation of the asphaltenes. The losses in production and the remediable operations which result therefrom represent significant costs.

Several attempts related in the art have been developed to address this issue. For instance, alkylphenol-based asphaltene inhibitors, especially alkylphenol formaldehyde resins such as nonylphenol formaldehyde resins, octyl phenol formaldehyde resins or decylphenol formaldehyde resins, are commonly and widely used in the oil and gas industry to prevent the precipitation of asphaltenes in crude oil.

However, the implementation of these alkylphenol-based asphaltene remains to be improved, in particular it would be desirable to dispense with the use of alkylphenol which might have some negative impact on the environment.

Accordingly, it remains a real need to provide novel additives which are effective in dispersing asphaltenes in crude oils as well as in products deriving therefrom and which therefore makes it possible to avoid the drawbacks described above.

Indeed, one of the purposes of the present invention is to provide novel additives that are efficient for dispersing the different types of asphaltene compounds which can be present in all kinds of crude oils and products derived therefrom such as heavy oils and residues.

### OBJECT OF THE INVENTION

The present invention namely results from the unexpected findings, by the inventors, that 4-(2-alkoxyethyl)phenol compound (also named O-alkylated tyrosol), as defined below, which is obtained from a bio-based substance, allows the preparation of a resin which is particularly efficient for dispersing asphaltenes and preventing the precipitation thereof in crude oils whatever their origin, as well as in petroleum products derived from such crude oils.

Therefore, the present invention relates to a resin obtainable by condensation of:
- at least one 4-(2-alkoxyethyl)phenol compound having the following formula (I): 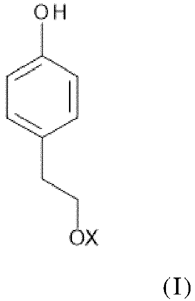 wherein X denotes:
   - a linear or branched, saturated or unsaturated, hydrocarbon group containing from 1 to 24 carbon atoms, optionally interrupted with one or more heteroatoms, especially one or more heteroatoms chosen among oxygen, nitrogen, sulfur and/or phosphorous atoms,
   - a saturated or unsaturated, aromatic or non-aromatic, cyclic or heterocyclic moiety, preferably a saturated or unsaturated, aromatic or non-aromatic, 6- to 24-membered heterocyclic or cyclic moiety;
- with at least one aldehyde having from 1 to 8 carbon atoms, preferably at least one aldehyde having from 1 to 4 carbon atoms.

The resin according to the present invention overcomes the issues raised in the prior art as this resin is very effective as an asphaltene inhibitor and exhibits good ecotoxicological results.

Indeed, the 4-(2-alkoxyethyl)phenol compound (also named O-alkylated tyrosol) implemented in the present invention exhibits the asset of being based on a naturally occurring nontoxic phenol and a renewable compound, also known as Tyrosol.

In particular, the 4-(2-alkoxyethyl)phenol compound (also named O-alkylated tyrosol) which is synthesized from a bio-based compound allows the preparation of asphaltene inhibitor having a low impact on environment, including towards aquatic ecosystems, such as marine environment and aquatic life.

In other words, this compound allows the preparation of nontoxic asphaltene inhibitor that are environment friendly.

Hence, the resin according to the present invention is very effective as an asphaltene inhibitor and exhibits good ecotoxicological results.

The resin according to the invention further displays the asset of not releasing any toxic substance during its implementation. Therefore, the resin according to the invention can be widely used in many countries.

Especially, the resin according to the invention can sustainably be used in marine environment.

As it based on tyrosol, a naturally occurring non-toxic phenol obtained from renewables (such as olive oil), it bespeaks that the 4-(2-alkoxyethyl)phenol compound and the 4-(2-alkoxyethyl)phenol resins according to the present invention have a low carbon footprint.

In particular, the 4-(2-alkoxyethyl)phenol resins (also named O-alkylated tyrosol resins) are biodegradable and reduce CO₂ emission.

The instant invention is also directed to the use of said resin as an asphaltene inhibitor.

Another object of the present invention deals with an additive composition comprising at least one resin obtainable by condensation of at least one 4-(2-alkoxyethyl)phenol compound (also named O-alkylated tyrosol compound) as previously defined with at least one aldehyde having from 1 to 8 carbon atoms.

The additive composition has an excellent solubility in crude oils as well as in petroleum products and is not harmful to human beings and to the environment. It does not give rise to corrosive or other aggressive products, or to solid products which may plug lines or deposit in storage vessels.

Such additive composition is very effective in keeping asphaltenes dispersed in a hydrocarbon matrix and in avoiding or delaying the phenomena of agglomeration and precipitation of asphaltenes. The composition is more effective than many additives already known in the prior art for dispersing asphaltenes. They are effective even when used at low treatment rates and over a great variety of crude oils whatever their compositions.

The present invention pertains to the use of such a composition as an additive in a petroleum product, as well as a petroleum product comprising such an additive composition.

Another subject-matter of the present invention also aims at a method for preventing the precipitation of asphaltenes present in a petroleum product, comprising a step of adding an additive composition as defined herein to said product.

A further subject-matter of the present invention deals with the use of said 4-(2-alkoxyethyl)phenol compound, as previously defined in formula (I), for the preparation of 4-(2-alkoxyethyl)phenol resins as defined herein after.

Other objects, features, aspects and advantages of the invention will become more apparent upon reading the following description and examples.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, Cₙ compound or group designates a compound or a group containing in its chemical structure n carbon atoms.

### DETAILED DESCRIPTION

### 4-(2-alkoxyethyl)phenol-aldehyde resins

The instant invention concerns a resin obtainable by condensation of at least one 4-(2-alkoxyethyl)phenol compound, as previously defined in formula (I), with at least one aldehyde having from 1 to 8 carbon atoms.

Said at least one 4-(2-alkoxyethyl)phenol compound has the following formula (I): 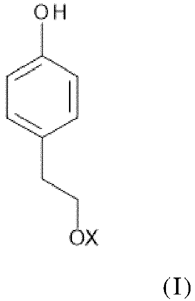 wherein X denotes:
- a linear or branched, saturated or unsaturated, hydrocarbon group containing from 1 to 24 carbon atoms optionally interrupted with one or more heteroatoms, especially one or more heteroatoms chosen among oxygen, sulfur, nitrogen and/or phosphorous atoms,
- a saturated or unsaturated, aromatic or non-aromatic, cyclic or heterocyclic moiety, preferably a saturated or unsaturated, aromatic or non-aromatic, 6- to 24-membered heterocyclic or cyclic moiety.

According to the present invention, an aromatic or non-aromatic moiety may represent a mono- or polycyclic, fused or not fused, radical comprising 6- to 24-membered groups, especially comprising from 6 to 24 carbon atoms, preferably from 6 to 12 carbon atoms.

According to one embodiment of the present invention, the cyclic moiety is aromatic and may represent a mono- or polycyclic, fused or not fused, comprising from 6 to 24 carbon atoms, preferably from 6 to 12 carbon atoms.

Preferably, an aromatic cyclic moiety may be chosen among the group consisting of phenyl, biphenyl or naphthyl, indenyl, anthracenyl, preferably phenyl.

According to one embodiment of the present invention, the cyclic moiety is non-aromatic and may represent a mono- or polycyclic, fused or not fused, comprising from 6 to 24 carbon atoms, preferably from 6 to 12 carbon atoms, and may comprise one or more unsaturations.

According to the present invention, an aromatic or non-aromatic heterocyclic moiety may represent a mono- or polycyclic, fused or not fused, saturated or unsaturated, radical comprising 6- to 24-membered groups, including one or more heteroatoms chosen from nitrogen, oxygen, phosphorous and/or sulfur atoms, preferably chosen from oxygen and/or nitrogen atoms.

Preferably, the heterocyclic moiety is aromatic and may be chosen among the group consisting of morpholinyl, thiomorpholinyl, piperidinyl, piperazinyl, pyrrolidinyl, tetrahydrofuranyl, tetrahydrothiophenyl, azepanyl, thioazepanyl; preferably pyrrolidinyl and morpholinyl.

Preferably, X represents a linear or branched, saturated or unsaturated, hydrocarbon group containing from 1 to 24 carbon atoms optionally interrupted with one or more heteroatoms, in particular chosen from nitrogen, oxygen or sulfur atom, especially one or several oxygen atoms.

Preferably, X represents a linear or branched, saturated or unsaturated, hydrocarbon group containing from 1 to 24 carbon atoms.

Preferably, X represents a linear or branched, saturated or unsaturated, hydrocarbon group containing 2 to 14 carbon atoms, more preferably from 3 to 12 carbon atoms.

More preferably, X is a linear or branched saturated hydrocarbon group containing 2 to 14 carbon atoms, even more preferably from 3 to 12 carbon atoms.

Advantageously, the compound of formula (I) is selected among the group constituted of the following compounds:

| | |
|---|---|
| 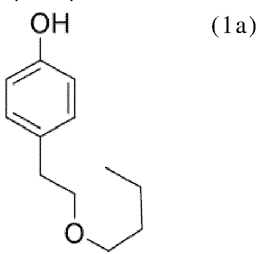 | 4-(2-butoxyethyl)phenol |
| 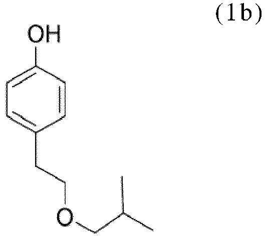 | 4-(2-isobutoxyethyl)phenol |
| 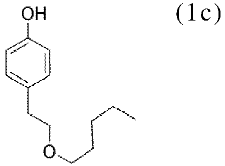 | 4-(2-(pentyloxy)ethyl)phenol |
| 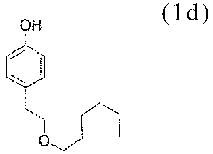 | 4-(2-(hexyloxy)ethyl)phenol |
| 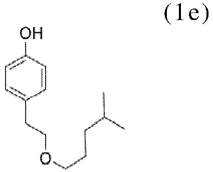 | 4-(2-((4-methylpentyl)oxy)ethyl)phenol |
| 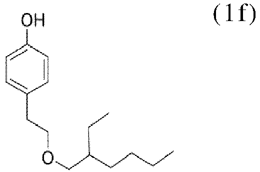 | 4-(2-((2-ethylhexyl)oxy)ethyl)phenol |
| 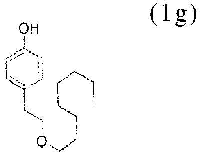 | 4-(2-(octyloxy)ethyl)phenol |
| 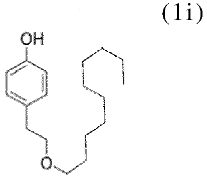 | 4-(2-(decyloxy)ethyl)phenol |
| 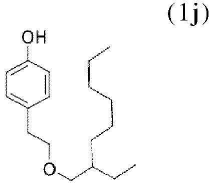 | 4-(2-((2-ethyloctyl)oxy)ethyl)phenol |
| 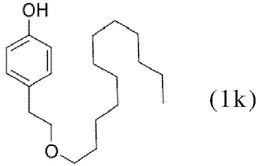 | 4-(2-(dodecyloxy)ethyl)phenol |

and mixtures thereof.

Most preferably, the compound of formula (I) is selected from the group constituted of 4-(2-butoxyethyl)phenol, 4-(2-isobutoxyethyl)phenol, 4-(2-((2-ethylhexyl)oxy)ethyl)phenol, 4-(2-(hexyloxy)ethyl)phenol, 4-(2-(octyloxy)ethyl)phenol, 4-(2-(decyloxy)ethyl)phenol, 4-(2-(dodecyloxy)ethyl)phenol or mixture thereof.

Said at least one aldehyde has from 1 to 8 carbon atoms, especially from 1 to 4 carbon atoms, more preferably from 1 to 2 carbon atoms, specifically 1 carbon atom.

Said aldehyde is preferably chosen from the group constituted of formaldehyde, acetaldehyde, propionaldehyde, butyraldehyde, 2-ethylhexanal, benzaldehyde and mixtures thereof.

More preferably, said aldehyde is chosen among the group constituted of formaldehyde, acetaldehyde and mixtures thereof.

Most preferably, said aldehyde is formaldehyde.

In other words, the resin according to the present invention is advantageously a 4-(2-alkoxyethyl)phenol - formaldehyde resin (also named O-alkylated tyrosol formaldehyde resin).

In still other words, the resin according to the present invention is advantageously a 4-(2-alkoxyethyl)phenol - formaldehyde resin having the following formula (II): 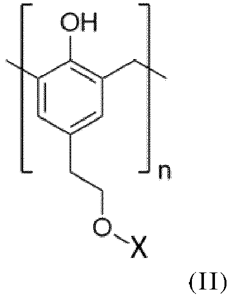 wherein X has the same meaning as in formula (I) and n is an integer ranging from 1 to 14, especially ranging from 12 to 14.

Preferably, X represents a linear or branched, saturated or unsaturated, hydrocarbon group containing 2 to 14 carbon atoms, more preferably from 3 to 12 carbon atoms.

The resin according to the invention is preferably selected among the group constituted of the following compounds:
4-(2-butoxyethyl)phenol - formaldehyde resin,
4-(2-isobutoxyethyl)phenol - formaldehyde resin,
4-(2-((2-ethylhexyl)oxy)ethyl)phenol - formaldehyde resin,
4-(2-(hexyloxy)ethyl)phenol - formaldehyde resin,
4-(2-(octyloxy)ethyl)phenol - formaldehyde resin,
4-(2-(decyloxy)ethyl)phenol - formaldehyde resin,
4-(2-(dodecyloxy)ethyl)phenol - formaldehyde resin,
or mixtures thereof.

Advantageously, the resin according to the invention is selected among the group constituted of 4-(2-butoxyethyl)phenol - formaldehyde resin, 4-(2-isobutoxyethyl)phenol - formaldehyde resin, or mixtures thereof.

The resin according to the present invention is obtainable by condensation of at least one 4-(2-alkoxyethyl)phenol compounds, as previously defined in formula (I), with at least one aldehyde having from 1 to 8 carbon atoms, as previously defined, preferably in the presence of at least one acidic catalyst, such as p-toluenesulfonic acid (pTSA).

### Method for preparing the resin

Another subject-matter of the present invention relates to a method for preparing at least one resin as previously defined, preferably comprising:
i) reacting 4-(2-hydroxyethyl)phenol with at least one alkanol of formula X-OH; wherein X has the same meaning as in formula (I), preferably in a solvent free continuous process in the presence of at least one heterogeneous catalyst, namely a cation exchange resin,
ii) reacting by condensation of said 4-(2-alcoxyethyl)phenol, as defined in formula (I), with at least one aldehyde having from 1 to 8 carbon atoms as previously defined.

Advantageously, step i) is a cross-etherification of 4-(2-hydroxyethyl)phenol with at least one alkanol corresponding to formula X-OH.

In other words, the 4-(2-alcoxyethyl)phenol compounds (also named O-alkylated tyrosol) as previously defined in formula (I) can be obtained in step i) by cross-etherification of 4-(2-hydroxyethyl)phenol and at least one alkanol having the formula X-OH.

The alkanol X-OH may be used in such method in an equimolar amount to 4-(2-hydroxyethyl)phenol or in excess, preferably in excess.

In a particular embodiment, the cross-etherification is preferably implemented in a solvent free continuous flow process.

Preferably, it is operated in the presence of at least one heterogeneous acid catalyst.

The heterogenous catalyst may namely be at least one cation exchange resin, preferably at least one sulfonic resin such as Amberlyst-15 as catalyst.

The cross-etherification of 4-(2-hydroxyethyl)phenol with at least one alkanol is namely carried out in one step.

The completion of the reaction may be monitored by a thin layer chromatography.

Step i) may be performed at a temperature ranging from 20°C to 200°C, preferably from 80°C to 150°C, more preferably from 100°C to 140°C, especially occurs at 120°C.

The condensation (step ii) may be performed in the presence of at least one an acidic catalyst, such as p-toluenesulfonic acid (pTSA), which may be dissolved in at least one polar solvent, preferably in at least one polar organic solvent such as toluene.

The condensation may be performed at a temperature ranging from 900°C to 2000°C, preferably from 1000°C to 1800°C.

Step ii) of said method may be performed one or several times.

On completion of step(s) (ii), the issued reaction mixture may be cooled and said at least aforementioned polar solvent is removed, preferably under high vacuum.

As previously detailed, a further subject-matter of the present invention deals with the use of said 4-(2-alkoxyethyl)phenol compound, as previously defined in formula (I), for the preparation of 4-(2-alkoxyethyl)phenol resins as previously defined.

### Use of the resin

As indicated, the present invention also encompasses the use of at least said resin, especially of at least one 4-(2-alkoxyethyl)phenol formaldehyde resin according to formula (II), as an asphaltene inhibitor.

Especially, the instant invention concerns the use of at least said resin, especially of at least one 4-(2-alkoxyethyl)phenol formaldehyde resin according to formula (II), as an asphaltene inhibitor in petroleum products.

Advantageously, a further subject-matter of the present invention is the use of at least said resin, especially of at least one 4-(2-alkoxyethyl)phenol formaldehyde resin according to formula (II), for preventing or reducing the precipitation of asphaltenes present in a petroleum product.

### Additive composition

As indicated, the present invention concerns an additive composition comprising at least one resin as previously defined, especially of at least one 4-(2-alkoxyethyl)phenol formaldehyde resin according to formula (II).

According to a preferred embodiment, the additive composition of the present invention further contains one or more liquid organic solvent(s). By liquid, it is meant a solvent which is in liquid form at ambient temperature (20°C) and atmospheric pressure (1,013.10⁵ Pa).

Such solvents may in particular be chosen from poly alkyl ethers, aliphatic hydrocarbons such as alkanes, aromatic solvents such as aromatic hydrocarbons and aromatic hetero-compounds, and mixtures thereof.

Preferred organic solvents are chosen from aromatic solvents, such as N-methylpyrrolidone, xylene, toluene, benzene; and poly alkyl ethers such as butyl carbitol (diethylene glycol monobutyl ether); as well as mixtures thereof.

Other preferred organic solvents include those derived from biomass, such as oils of vegetable origin. A particularly preferred solvent is cashew nutshell liquid, also known as CSNL, which is a widely available vegetable oil derived from cashew nutshell. CNSL can be used as a mixture with any other solvent such as those described herein.

Preferably, the additive composition comprises one or more organic solvent chosen among the group constituted of oils of vegetable origin, especially cashew nutshell liquid.

The composition of the invention may contain an amount of solvent ranging from 25 to 95% by weight, preferably from 40 to 90%wt of the composition, more preferably from 50 to 80%wt, relative to the total weight of the composition.

When it contains a solvent, the composition advantageously contains said resins as previously defined, especially of said 4-(2-alkoxyethyl)phenol formaldehyde resin according to formula (II), in a total amount ranging from 5 to 75% by weight, preferably from 10 to 60% by weight, more preferably from 20 to 50% by weight, relative to the total weight of the composition.

The additive composition may further contain one or more additional additives, different(s) from the resin previously defined.

Mention may be made, as additional optional additives, of: dispersants/detergents, metal passivators, antioxidants, corrosion inhibitors, biocides, demulsifiers, antifoam agents, paraffin deposition inhibitors, pour point lowering agents, paraffin anti-settling additives, wax inhibitors, scale inhibitors, foamers, anti-foulant, H2S scavengers, organic deposit inhibitors, such as naphthenic acids, mineral deposit inhibitors, heat stabilizers, emulsifiers, friction reducers, surfactants, reodorants and their mixtures.

Preferred additional additives are:
i) antifoam additives, in particular (but non limitatively) chosen from polysiloxanes, oxyalkylated polysiloxanes and amides of fatty acids resulting from vegetable or animal oils;
ii) detergent additives and/or corrosion inhibitors, in particular (but non limitatively) chosen from the group consisting of amines, succinimides, alkenylsuccinimides, polyalkylamines, polyalkylpolyamines, polyetheramines and imidazolines;
iii) lubricating additives or antiwear agents, in particular (but non limitatively) chosen from the group consisting of fatty acids and their ester or amide derivatives, in particular glycerol monooleate, and derivatives of mono- and polycyclic carboxylic acid;
iv) crystallization-modifying additives, additives which inhibit paraffin deposits, additives which lower the pour point; modifiers of the rheology at low temperature, such as ethylene/vinyl acetate (EVA) and/or ethylene/vinyl propionate (EVP) copolymers, ethylene/vinyl acetate/vinyl versatate (E/VA/VeoVA) terpolymers; ethylene/vinyl acetate/alkyl acrylate terpolymers; EVA copolymers modified by grafting; polyacrylates; acrylates/vinyl acetate/maleic anhydride terpolymers; amidated maleic anhydride/alkyl (meth)acrylate copolymers capable of being obtained by reaction of a maleic anhydride/alkyl (meth)acrylate copolymer and of an alkylamine or polyalkylamine having a hydrocarbon chain of 4 to 30 carbon atoms, preferably of 12 to 24 carbon atoms; amidated α-olefin/maleic anhydride copolymers capable of being obtained by reaction of an α-olefin/maleic anhydride copolymer and of an alkylamine or polyalkylamine, it being possible for the α-olefin to be chosen from C10-C50 α-olefins, preferably from C16-C20 α-olefins, and the alkylamine or the polyalkylamine advantageously having a hydrocarbon chain of 4 to 30 carbon atoms, preferably of 12 to 24 carbon atoms. Mention may be made, as examples of terpolymers, of those which are described in EP01692196, WO2009/106743, WO2009/106744, U.S. Pat. No. 4,758,365 and U.S. Pat. No. 4,178,951;
v) antioxidants, for example of hindered phenolic type or aminated of alkylated para-phenylenediamine type;
vi) metal passivators;
vii) acidity neutralizers.

### The use

The additive composition as described above is particularly useful for dispersing asphaltenes in petroleum products. Said composition can especially be used for preventing or reducing the precipitation of asphaltenes present in a petroleum product.

According to a preferred embodiment, the composition of invention is used as an additive in a petroleum product which is handled in an equipment chosen from a tank, a refining plant, a pipeline, a drilling well, a storage vessel, a transportation equipment or a filter.

The petroleum product may be a crude oil or any product which derives therefrom by any refining and/or extraction process. The petroleum product may also be a bitumen, such as bitumens of natural origin such as those present in natural bitumen or natural asphalt deposits, or bituminous sands, the bitumens originating from the refining of crude oil, in particular from the atmospheric and/or vacuum distillation of oil, it being possible for these bitumens to optionally be blown, visbroken and/or deasphalted and/or mixed.

The petroleum product is especially selected from crude petroleum oils; hydrocarbon fractions and residues deriving from the distillation thereof such as in heavy fuel oils, heavy residues; and bitumens.

The additive composition is advantageously used in an amount ranging from 1 to 5000 ppm by weight, preferably from 5 to 2000 ppm, more preferably from 10 to 1000 ppm and more preferably still from 15 to 500 ppm, expressed as total weight of said resin as previously defined, especially of said 4-(2-alkoxyethyl)phenol formaldehyde resin according to formula (II), with respect to the total weight of the petroleum product.

### The petroleum product

The petroleum product contains a crude oil or a product which results therefrom by any refining and/or extraction process, and an additive composition as described above.

The petroleum product may also contain a bitumen, such as bitumen of natural origin such as those present in natural bitumen or natural asphalt deposits, or bituminous sands, the bitumen originating from the refining of crude oil, in particular from the atmospheric and/or vacuum distillation of oil, it being possible for these bitumen to optionally be blown, visbroken and/or deasphalted and/or mixed.

The petroleum product preferably contains a crude petroleum oil and/or at least one hydrocarbon fraction or at least one residue deriving from the distillation of crude petroleum oil, such as heavy fuel oils, heavy residues and/or at least one bitumen.

The petroleum product advantageously contains at least one resin as previously defined, especially of at least one 4-(2-alkoxyethyl)phenol formaldehyde resin according to formula (II), at an amount ranging from 1 to 5000 ppm by weight, preferably from 5 to 2000 ppm, more preferably from 10 to 1000 ppm and more preferably still from 15 to 500 ppm, with respect to the total weight of the petroleum product.

### The method

The method of the invention for preventing the precipitation of asphaltenes present in a petroleum product comprises a step of adding an additive composition as defined herein to said product.

The petroleum product is advantageously chosen from those described above.

The additive composition is preferably added in an amount ranging from 1 to 5000 ppm by weight, preferably from 5 to 2000 ppm, more preferably from 10 to 1000 ppm and more preferably still from 15 to 500 ppm, expressed as total weight of said resin as previously defined, especially of said 4-(2-alkoxyethyl)phenol formaldehyde resin according to formula (II), with respect to the total weight of the petroleum product.

According to a preferred embodiment, the method of the invention comprises at least two steps:
(1) the introduction of an additive composition as described above into the petroleum product, and
(2) a treatment step chosen from: a rise in pressure, a rise in temperature and a mixing with at least one other fluid.

According to a most preferred embodiment, steps (1) and (2) are carried out successively (step 1 and then step 2).

According to a preferred variant, step (2) is chosen from: an extraction of a crude oil from a reservoir, a stage of refining a crude oil or a derived product, a transportation of a crude oil or of a derived product, a filtration of a crude oil or of a derived product, an injection of gas into a crude oil or into a derived product, a mixing of crude oils or of derived products, and a mixing of a crude oil or of a derived product with a solvent.

Step (2) can for example correspond to a pressurization, for example in a pipeline or any type of pipe, or through a filter; it can comprise a heating in a refining plant, an injection of a gas or a mixing with another variety of crude oil or with another grade of heavy oil resulting from the refining.

Conventionally, such treatments result in a precipitation of asphaltenes and a fouling and/or a clogging of the equipment. The method of the invention makes it possible to keep the asphaltenes in dispersion during these treatments and to improve the compatibility of the asphaltenes with the non-asphaltenic part of the petroleum product.

The method of the invention is advantageously carried out in an equipment chosen from: a tank, a drilling well, a refining plant, a pipeline, a storage vessel, a transportation equipment or a filter.

The method can be carried out at any stage from the recovery of crude oils from a reservoir up to the refining and the use of the hydrocarbon fractions, via the transportation of the different petroleum products deriving therefrom. The invention is targeted at keeping the asphaltenes in dispersion in the medium, so as to improve the recovery of the crude oils, to stop, prevent, decrease or delay the precipitation of the asphaltenes, the formation of asphaltene deposits, the fouling in the tanks, treatment and transportation plants, such as the extraction or refining equipment, the pipelines, the pipes of all types, the filters, the storage vessels.

The example hereafter only aims at illustrating the present invention and shall not be interpreted so as to limit its scope.

### EXAMPLES

### Example 1:

### (IA) Preparation of 4-(2-butoxyethyl)phenol - formaldehyde resin

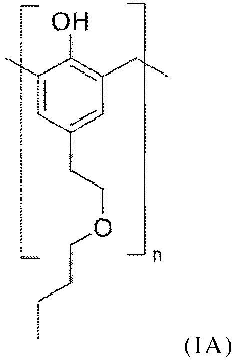

The 4-(2-butoxyethyl)phenol - formaldehyde resin responding to formula (IA) was synthesized using the protocol below.

### Stage 1: Synthesis of 4-(2-butoxyethyl)phenol (1a)

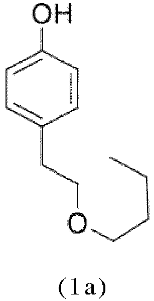

0.1 M solution of 4-(2-hydroxyethyl)phenol, as a tyrosol starting material (1) (5g, 0.0362 mol), in n-butanol (362 mL) was flown five times through the packed bed reactor (Omnift column: 10mm width ×150 mm height) loaded with a heterogeneous catalyst, i.e Amberlyst^{®}-15, up to 7 cm (3.5 g), swollen up to 10 cm at 120 °C with residence time 36.7 min and flow rate 0.3 mL/min (4.5 bar pressure).

The completion of the reaction was monitored by thin-layer chromatography. The reaction mixture was evaporated by vacuum.

Finally, the crude product was purified by column chromatography by using silica-gel (60-120 mesh) and EA/hexane (9%) to afford pure 4-(2-butoxyethyl)phenol (1a) in 73% yield (5.13g).

The purified compound was characterized by ¹H NMR, ¹³C NMR, and HRMS.
**¹H NMR** (CDCl₃, 400 MHz) *δ* = 7.04 (d, *J* = 8.4 Hz, 2H), 6.73 - 6.71 (m, 2H), 3.62 (t, *J* = 7.3 Hz, 2H), 3.47 (t, *J* = 6.8 Hz, 2H), 2.81 (t, *J* = 7.3 Hz, 2H), 1.59 -1.55 (m, 2H), 1.34 (dd, *J* = 15.1, 7.5 Hz, 2H), 0.89 (t, *J* = 7.4 Hz, 3H) ppm;
**¹³C NMR** (CDCl₃, 101 MHz) *δ* = 157.9, 130.2, 129.9, 114.7, 67.7, 63.8, 38.3, 31.4, 30.9, 19.3, 13.9 ppm;
**HRMS** (ESI) Calculated for C₁₂H₁₈O₂ (M+H)⁺: 195.1385; found: 195.1350.(reapting).

### Stage 2: Synthesis of 4-(2-butoxyethyl)phenol - formaldehyde resin (IA):

In a second stage, 4-(2-butoxyethyl)phenol formaldehyde (IA) resin was prepared by condensation of 4-(2-butoxyethyl)phenol (1a) and formaldehyde in the presence of at least one acidic catalyst:
A three-neck 500ml round bottom flask was equipped with a magnetic stirrer and Dean Stark trap with a reflux condenser along with a Schlenk line for maintaining the nitrogen atmosphere. In the initial step, 4-(2-butoxyethyl)phenol was taken along with acid catalyst such p-TSA in 10 mL of toluene.

The mixture was then stirred under a nitrogen blanket at 120°C, and a solution of trioxane in toluene (20 mL) was taken in a syringe and added drop wise over a period of about 1hr by using syringe pump repeatedly for three times.

After the addition of trioxane, the temperature increased to 165°C, and the reaction continued for 10 hours. The procedure was then repeated for 10hrs using same amount of p-TSA, trioxane. When the collection of water stopped, the reaction mixture was cooled, and the toluene was removed under a high vacuum. The crude precipitated by the methanol (approx. 50 mL), DCM (approx. 20 mL) and found the polymer as an insoluble gel. The solvent was evaporated by rotary evaporator.

The pure gel was dried under vacuum which afforded a solid polymer.

The 4-(2-butoxyethyl)phenol - formaldehyde resin (IA) exhibits a good ecotoxicity profile.

### Preparation of 4-(2-isobutoxyethyl)phenol - formaldehyde resin (IB)

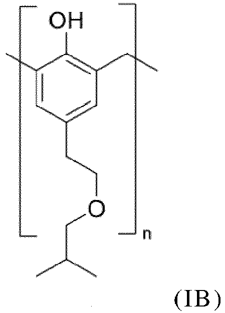

The 4-(2-isobutoxyethyl)phenol - formaldehyde resin responding to formula (IB) was synthesized using the protocol below.

### Stage 1: Synthesis of 4-(2-isobutoxyethyl)phenol (1b)

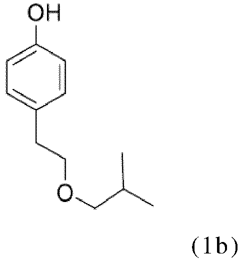

4-(2-isobutoxyethyl)phenol was prepared in continuous flow by 0.1 molar solution of starting material 4-(2-hydroxyethyl)phenol (1) (1 g, 0.0072 mol) in isobutanol (72 mL) was passed four times through a heterogeneous catalyst i.e Amberlyst^{®}-15 column bed of 7 cm (3.5 g) in Omnifit column (10mm width x150 mm height), which is swollen up to 10 cm at 120°C with residence time 36.7 min and flow rate 0.3 mL/min (4.5 bar pressure).

The completion of the reaction was monitored by thin-layer chromatography. The reaction mixture was evaporated by vacuum, the crude product was purified by column chromatography by using silica-gel (60-120 mesh) and EA/hexane (9%) to afford pure 4-(2-isobutoxyethyl)phenol in 82% yield (1.16g).

The purified compound was characterized by ¹H NMR, ¹³C NMR, and HRMS.
**¹H NMR** (CDCl₃, 400 MHz) *δ* = 7.07 (d, *J* = 8.5 Hz, 2H), 6.74 (d, *J* = 8.5 Hz, 2H), 6.22 (s, 1H), 3.63 (t, *J* = 7.3 Hz, 2H), 3.25 (d, *J* = 7.5 Hz, 2H), 2.83 (t, *J* = 7.3 Hz, 2H), 1.89 (dp, *J* = 13.4, 6.7 Hz, 1H), 0.90 (d, *J* = 6.7 Hz, 6H) ppm;
**¹³C NMR** (CDCl₃, 101 MHz) *δ* = 154.3, 130.7, 130.0, 115.4, 78.0, 72.3, 35.3, 28.3, 19.4 ppm;
**HRMS** (ESI) Calculated for C₁₂H₁₈O₂ (M+H)⁺: 195.1385; found: 195.1357. (repeating)

### Stage 2: Synthesis of 4-(2-isobutoxyethyl)phenol-formaldehyde resin (IB)

In a second stage, 4-(2-isobutoxyethyl)phenol formaldehyde resin (IB) was prepared by condensation of 4-(2-isobutoxyethyl)phenol and formaldehyde in the presence of acidic catalyst:
A three-neck 500ml round bottom flask was equipped with a magnetic stirrer and Dean Stark trap with a reflux condenser along with a Schlenk line for maintaining the nitrogen atmosphere. In the initial step, 100 g (0.514 mol) of 4-(2-isobutoxyethyl)phenol was taken along with acid catalyst i.e., p-TSA (0.215 g, 0.0011 mol) in 10 mL toluene.

The mixture was then stirred under a nitrogen blanket at 1200C, and a solution of trioxane 13 g (0.154 mol) in toluene (20 mL) was taken in a syringe and added drop wise over a period of about 1hr by using syringe pump repeatedly for three times.

After the addition of trioxane, the temperature increased to 1650C, and the reaction continued for 10hrs. Again, the procedure was repeated for 10hrs using same amount of p-TSA (0.215 g, 0.0011 mol), trioxane 13 g (0.154 mol).

When the collection of water stopped, the reaction mixture was cooled, and the toluene was removed under a high vacuum.

The crude precipitated by the methanol (approx. 50 mL), DCM (approx. 20 mL) and found the polymer as an insoluble gel. The solvent was evaporated by rotary evaporator. The pure gel was dried under vacuum which afforded 83 g of solid polymer.

The 4-(2-isobutoxyethyl)phenol formaldehyde resin (IB) exhibits a good ecotoxicity profile.

### Preparation of 4-(2-((2-ethylhexyl)oxy)ethyl)phenol formaldehyde resin (IE)

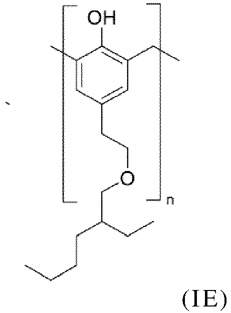

The 4-2-((2-ethylhexyl)oxy)ethyl)phenol formaldehyde resin responding to formula (IE) was synthesized using the protocol below.

### Stage 1: Synthesis of 4-(2-((2-ethylhexyloxy)ethyl)phenol (1e)

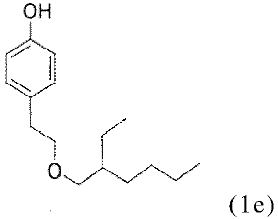

A 0.1 molar solution of starting material 4-(2-hydroxyethyl)phenol (1) (1g, 00072 mol) and 2-ethyl hexanol ( 72 mL) was passed eight times through a heterogeneous catalyst i.e Amberlyst^{®}-15 column bed of 7 cm (3.5 g) at a temperature of 120°C with residence time 36.7 min and flow rate 0.3 mL/min (4.6 bar pressure).

The completion of the reaction was monitored by thin layer chromatography. Then, the reaction mixture was evaporated by vacuum distillation method to remove 2-ethyl hexanol and got the crude 2-ethyl hexyl ether (3h).

Then the crude product (3h) was purified through column chromatography by using silica-gel (60-120 mesh) and EA/hexane (15%) to afford pure product (3h) in 88% yield (1.54 g) as a colorless liquid.

The purified compound was characterized by ¹H NMR, ¹³C NMR and HRMS.

¹H NMR (CDCl₃, 400 MHz) *δ* = 7.05 (d, *J* = 8.4 Hz, 2H), 6.73 (d, *J* = 8.5 Hz, 2H), 3.56 - 3.54 (m, 4H), 3.31 (d, *J* = 6.1 Hz, 2H), 2.81-2.77 (m, 1H), 1.41-1.25 (m, 8H), 0.90-0.83 (m, 6H) ppm; ¹³C NMR (CDCl₃, 101 MHz) *δ* = 154.6, 130.5, 129.9, 115.3, 74.0, 72.4, 65.3, 41.9, 30.1, 29.2, 23.3, 23.0, 14.1, 11.0 ppm; HRMS (ESI) Calculated for C₁₆H₂₆O₂ (M+H)⁺: 251.2011 found: 251.2021.

### Stage 2: Synthesis of 4-(2-((2-ethylhexyl)oxy)ethyl)phenol formaldehyde resin(1e)

A three-neck 500ml round bottom flask was equipped with a magnetic stirrer and stark dean trap with a reflux condenser along with Schlenk line for maintaining nitrogen atmosphere.

In the initial step, 100 gram (0.3996 mol) of Tyrosol ether as previously obtained (1e) was taken along with acid catalyst i.e, p-TSA (0.167g, 0.0008 mol) in 10mL toluene. The mixture was then stirred under a nitrogen blanket at 120°C, and a solution of Trioxane 10.83 g (0.12027 mol) in toluene (20mL) was taken in a syringe and added dropwise over a period of about 1 hour by using syringe pump repeatedly for three times. After the addition of Trioxane, the temperature increased to 165°C, and the reaction continued for 10 hours. The procedure was repeated once again for 10h using same amount of p-TSA (0.167g, 0.0008 mol), Trioxane 10.83 g (0.12027 mol).

When the collection of water stopped, the reaction mixture was cooled, and toluene was removed under a high vacuum. The crude product precipitated by the methanol (approx. 50 mL) results in a polymer as an insoluble gel.

The solvent was evaporated by rotary evaporator. The pure gel was dried under vacuum for 6 hours then dried through open air for long time.

### Preparation of 4-(2-(hexyloxy)ethyl)phenol formaldehyde resin (ID)

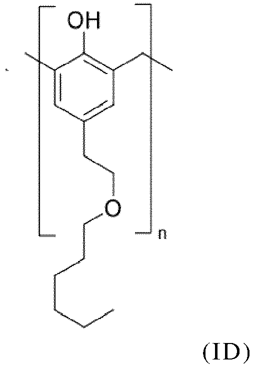

The 4-(2-(hexyloxy)ethyl)phenol formaldehyde resin responding to formula (ID) was synthesized using the protocol below.

### Stage 1: synthesis of 4-(2-(hexyloxy)ethyl)phenol (1d)

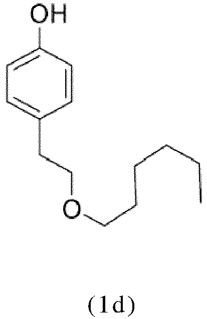

### (1d) Synthesis diagram for obtaining 4-(2-(hexyloxy)ethyl)phenol

The starting material 4-(2-hydroxyethyl)phenol (50g, 0.361mol) reacted with 1-hexanol (200 mL) by using a heterogeneous catalyst (50g, w/w) i.e Amberlyst^{®}-15 at 120 °C for 22 hours. The completion of the reaction was monitored by TLC.

After that, the reaction mixture was filtered out with a Buchner funnel by repeatedly washing with 1-hexanol (100 mL) and ethyl acetate. Then, the filtrate was evaporated under reduced pressure to remove 1-hexanol to afford the crude 4-(2-(hexyloxy)ethyl)phenol.

Then, the crude product was purified by column chromatography by using silica-gel (100-200 mesh) and EA/hexane (4%) to afford pure 4-(2-hexyloxy)ethyl)phenol in 78% yield (126g) and 1-(hexyloxy)hexane in yield 25g.

**¹H NMR** (CDCl₃, 400 MHz) *δ* = 7.07 (d, *J* = 8.5 Hz, 2H), 6.73 (d, *J* = 8.5 Hz, 2H), 5.45 (s, 1H), 3.61 (t, *J* = 7.3 Hz, 2H), 3.45 (t, *J* = 6.8 Hz, 2H), 2.82 (t, *J* = 7.3 Hz, 2H), 1.62 - 1.53 (m, 2H), 1.31 (m, 6H), 0.88 (t, *J* = 6.9 Hz, 3H) ppm; **¹³C NMR** (CDCl₃, 101 MHz) *δ* = 154.1, 130.9, 130.0, 115.2, 72.0, 71.2, 35.4, 31.7, 29.6, 25.8, 22.6, 14.1 ppm; **HRMS** (ESI) Calculated for C₁₄H₂₂O₂ (M+H)⁺: 223.1698; found: 223.1696.

### Stage 2: Synthesis of 4-(2-(hexyloxy)ethyl)phenol formaldehyde resin (ID)

A three-neck 500ml round bottom flask was equipped with a magnetic stirrer, and Dean Stark trap with a reflux condenser along with Schlenk line for maintaining nitrogen atmosphere.

In the initial step, 50 g (0.24 mol) of 4-(2-hexyloxy)ethyl)phenol as previously obtained was taken along with acid catalyst i.e, p-TSA (0.1 g, 0.0005 mol) in 5 mL toluene.

The mixture was then stirred under a nitrogen blanket at 120 °C, and trioxane 6.09 g (0.068 mol) was separated ad added in three portions with one-hour time interval. After the addition of trioxane, the temperature increased to 165 °C and the reaction continued for 10 hours and monitored by TLC until the disappearance of the 4-(2-(hexyloxy)ethyl)phenol. The procedure was again repeated for 10 hours using same amount of *p*-TSA (0.215 g, 0.0005 mol), trioxane 6.09 g (0.068 mol).

When the collection of water stopped, the reaction mixture was cooled, and the toluene was removed under high vacuum.

The obtained polymer was dissolved in minimum quantity of a suitable solvent either DCM or THF. After that, 40 mL of MeOH was added to the polymeric reaction mixture.

The insoluble gel of polymer appeared in the lower layer of the reaction mixture and the upper layer of precipitate MeOH was separated. This process is repeated 10 to 20 times. The pure gel form of the polymer was finally dried under high vacuum for 6 hours, giving 21g of solid polymer.

The end product 4-(2-(hexyloxy)ethyl)phenol formaldehyde resin was characterized by NMR analysis.
**¹H NMR** (CDCl₃, 400 MHz) *δ* = 9.41 (s, 1H, -OH), 7.03-6.98 (m, 2H, Ar-H), 3.81 (s, 2H, Ar-CH₂-Ar), 3.57 - 3.50 (t, 2H, -OCH₂-), 3.44 -3.39 (t, 2H, -OCH₂-),2.80 - 2.76 (t, 2H, Ar-CH₂-CH₂-O-), 1.59 - 1.18 (m, 8H, Alkyl) and 0.88 - 0.87 (t, 3H, -CH₃) ppm;
**¹³C NMR** (CDCl₃, 101 MHz) *δ* = 147.33, 129.88, 129.16, 128.84, 72.15, 71.77, 35.59, 31.73, 29.77, 25.93, 22.66 and 14.07 ppm;
**DEPT 135 NMR** (CDCl₃, 101 MHz) *δ* = 129.81, 129.16, 72.15, 71.17, 35.51, 31.73, 29.77, 25.93, 22.66 and 14.07 ppm.

### Preparation of 4-(2-octyloxy)ethyl)phenol formaldehyde resin (IG)

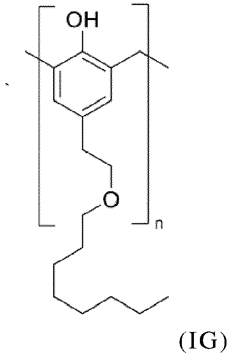

This resin was synthesized using the same protocols as those previously described by using 4-(2-(octyloxy)ethylphenol (tyrosol 2-octyl ether - 1g) and octanol as starting materials.

### Preparation of 4-(2-(decyloxy)ethyl)phenol formaldehyde resin

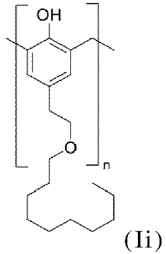

This resin was synthesized using the same protocol as those previously described by using 4-(2-(decyloxy)ethyl)phenol (1i) and decanol as starting materials.

The purified compound was characterized by ¹H NMR, ¹³C NMR, and HRMS.
**¹H NMR** (CDCl₃, 400 MHz) *δ* = 7.07 (d, *J* = 8.6 Hz, 2H), 6.73 (d, *J* = 8.4 Hz, 2H), 5.76 (s, 1H), 3.60 (q, *J* = 7.2 Hz, 2H), 3.45 (q, *J* = 6.9 Hz, 2H), 2.82 (t, *J* = 7.3 Hz, 2H), 1.58 (d, *J* = 2.6 Hz, 2H), 1.26 (s, 14H), 0.88 (t, J = 6.5 Hz, 3H) ppm;
**¹³C NMR** (CDCl₃, 101 MHz) *δ* = 154.2, 130.8, 129.9, 115.3, 72.1, 71.2, 35.4, 31.9, 29.6, 29.6, 29.5, 29.4, 29.3, 26.1, 22.6, 14.1 ppm;
**HRMS** (ESI) Calculated for C₁₈H₃₀O₂ (M+H)⁺: 279.2324 found: 279.2307.

### Preparation of 4-(2-(dodecyloxy)ethyl)phenol formaldehyde resin

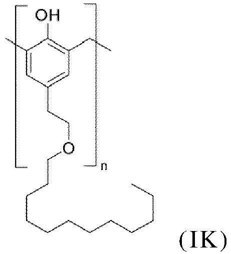

### Stage 1: synthesis of 4-(2-(dodecyloxy)ethyl)phenol (1k)

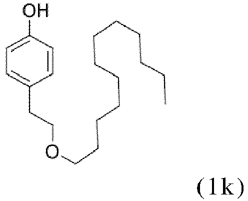

A 0.1 M solution of the 4-(2-hydroxyethyl)phenol (1) (1g. 0.0072mmol in 72 mL of *n*-dodecanol) was flown through the packed bed reactor (Omnifit, 10.0 mm i.d. × 150.0 mm length) loaded with Amberlyst^{®}-15 up to 7 cm (3.5g, swollen up to 10 cm after passing solvent) of bed heated at 120 °C temperature at 4.5 to 4.6 bar pressure.

The organic layer was concentrated under reduced pressure, and the residue was subjected to column chromatography (EtOAc: n-hexane =4%) purification affording corresponding 4-(2-(dodecyloxy)ethyl)phenol and *n*-dodecanol in 71% yield 1.6 g) as a mixture in 2:1 ration.

The purified compound was characterized by ¹H NMR, ¹³C NMR and HRMS.
**¹H NMR** (CDCl₃, 400 MHz) *δ* = 7.06 (d, *J* = 8.5 Hz, 2H), 6.73 (d, *J* = 8.5 Hz, 2H), 5.87 (s, 1H), 3.66 (t, *J* = 6.7 Hz, 1H), 3.60 (t, *J* = 7.4 Hz, 2H), 3.45 (t, *J* = 6.8 Hz, 2H), 2.81 (t, *J* = 7.3 Hz, 2H), 1.62 - 1.53 (m, 3H), 1.28 (d, J = 17.7 Hz, 27H), 0.88 (t, J = 6.8 Hz, 4H) ppm;
**¹³C** NMR (CDCl₃, 101 MHz) *δ* = 153.3, 129.6, 128.9, 114.2, 71.0, 70.1, 62.1, 34.3, 31.6, 30.9, 28.6, 28.5, 28.4, 28.3, 28.3, 25.1, 24.6, 21.6, 13.1 ppm;
**HRMS** (ESI) Calculated for C₂₀H₃₄O₂ (M+H)⁺: 307.2637 found: 307.2095

### Stage 2: synthesis of 4-(2-(dodecyloxy)ethyl)phenol formaldehyde resin

A three-neck 500ml round bottom flask was equipped with a magnetic stirrer, and Dean Stark trap with a reflux condenser along with Schlenk line for maintaining nitrogen atmosphere.

In the initial step, 55.55 g (0.181 mol) of 4-(2-(dodecyloxy)ethyl)phenol was taken along with acid catalyst, namely p-TSA (0.076 g, 0.0004 mol) in 5.5 mL toluene. The mixture was then stirred under a nitrogen blanket at a temperature of 120°C and trioxane 4.91 g (0.055 mol) was added in three portions with one-hour time interval. After the complete addition of trioxane, the temperature increased to 165°C and the reaction continued for 10 hours and monitored by TLC until the disappearance of the 4-(2-(dodecyloxy)ethyl)phenol. Once again, the procedure was repeated for 10 hours using the same amount of p-TSA (0.076g, 0.0004 mol), trioxane 4.91 g (0.055 mol).

When the collection of water stopped, the reaction mixture was cooled and the toluene was removed under high vacuum. The resultant polymer was dissolved in minimum quantity of a suitable solvent either DCM or THF. After that, 40 mL of methanol MeOH was added to the polymeric reaction mixture. After the addition of the MeOH solvent, the polymeric reaction mixture was gently handled with hand stirring.

The insoluble gel polymer appeared in the lower layer of the reaction mixture and the upper layer of precipitate MeOH was separated.

The pure gel form of the polymer was then dried under high vacuum for 6 hours resulting in 21.2 g of gel polymer.

The polymer was characterized by NMR Analysis and GPC data (Mw = 11 908).

### Preparations of compositions (A1) - (A7)

An additive composition (A1) was prepared by dissolving 4-(2-butoxyethyl)phenol formaldehyde resin with xylene as a solvent. The amount of resin in composition (A1) is 50% by weight relative to the total weight of the composition.

An additive composition (A2) was prepared by dissolving 4-(2-isobutoxyethyl)phenol formaldehyde resin with xylene as a solvent. The amount of resin in composition (A2) is 50% by weight relative to the total weight of the composition.

An additive composition (A3) was prepared by dissolving 4-(2-((2-ethylhexyl)oxy)ethyl)phenol formaldehyde resin with xylene as a solvent. The amount of resin in composition (A3) is 50% by weight relative to the total weight of the composition.

An additive composition (A4) was prepared by dissolving 4-(2-(hexyloxy)ethyl)phenol formaldehyde resin with xylene as a solvent. The amount of resin in composition (A4) is 50% by weight relative to the total weight of the composition.

An additive composition (A5) was prepared by dissolving 4-(2-(octyloxy)ethyl)phenol formaldehyde resin with xylene as a solvent. The amount of resin in composition (A5) is 50% by weight relative to the total weight of the composition.

An additive composition (A6) was prepared by dissolving 4-(2-(decyloxy)ethyl)phenol formaldehyde resin with xylene as a solvent. The amount of resin in composition (A6) is 50% by weight relative to the total weight of the composition.

An additive composition (A7) was prepared by dissolving 4-(2-(dodecyloxy)ethyl)phenol formaldehyde resin with xylene as a solvent. The amount of resin in composition (A7) is 50% by weight relative to the total weight of the composition.

### Assessment of efficiency of said additive compositions (A1) - (A7)

The efficiency in terms of preventing asphaltene precipitation on long term storage of compositions (A1) - (A7) above was assessed by mixing thoroughly each composition in the Varandey crude oil, at respective treatment rates (total amount of active matter) of 10 ppm by weight, 25 ppm by weight, 50 ppm by weight and 100 ppm by weight.

The presence of sediments was assessed by visual observation of the samples, immediately after preparation and after storage thereof at room temperature for a duration detailed in the table below.

The results obtained are detailed in Table 1 below, in terms of percentage of asphaltene dispersion.

**Table 1**

| Test duration | 2h | 24h | 48h | 168h |
|---|---|---|---|---|
| Additive composition | | | | |
| A1 | | | | |
| 10 ppm | 100% | 100% | 100% | 75% |
| 25 ppm | 100% | 100% | 100% | 100% |
| 50 ppm | 100% | 100% | 100% | 100% |
| 100 ppm | 100% | 100% | 100% | 100% |

| A2 | | | | |
|---|---|---|---|---|
| 10 ppm | 100% | 100% | 100% | 100% |
| 25 ppm | 100% | 100% | 100% | 100% |
| 50 ppm | 100% | 100% | 100% | 100% |
| 100 ppm | 100% | 100% | 100% | 100% |

| A3 | | | | |
|---|---|---|---|---|
| 10 ppm | 100% | 100% | 100% | 75% |
| 25 ppm | 100% | 100% | 100% | 100% |
| 50 ppm | 100% | 100% | 100% | 100% |
| 100 ppm | 100% | 100% | 100% | 100% |

| A4 | | | | |
|---|---|---|---|---|
| 10 ppm | 75% | 75% | 75% | 75% |
| 25 ppm | 100% | 100% | 100% | 100% |
| 50 ppm | 100% | 100% | 100% | 100% |
| 100 ppm | 100% | 100% | 100% | 100% |

| A5 | | | | |
|---|---|---|---|---|
| 10 ppm | 100% | 100% | 100% | 75% |
| 25 ppm | 100% | 100% | 100% | 100% |
| 50 ppm | 100% | 100% | 100% | 100% |
| 100 ppm | 100% | 100% | 100% | 100% |

| A6 | | | | |
|---|---|---|---|---|
| 10 ppm | 100% | 100% | 100% | 100% |
| 25 ppm | 100% | 100% | 100% | 100% |
| 50 ppm | 100% | 100% | 100% | 100% |
| 100 ppm | 100% | 100% | 100% | 100% |

| A7 | | | | |
|---|---|---|---|---|
| 10 ppm | 75% | 75% | 50% | 25% |
| 25 ppm | 75% | 75% | 75% | 50% |
| 50 ppm | 100% | 100% | 100% | 75% |
| 100 ppm | 100% | 100% | 100% | 100% |

The above results show that additive compositions A1 to A7 provide an effective prevention of asphaltene precipitation on long term-storage, as all compositions remained fully dispersed without any apparition of sediments.

## Claims

1. Resin obtainable by condensation of:
- at least one 4-(2-alkoxyethyl)phenol compound having the following formula (I): 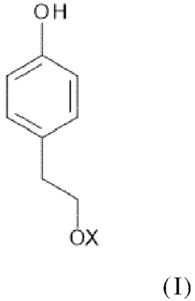 wherein X denotes:
• a linear or branched, saturated or unsaturated, hydrocarbon group containing from 1 to 24 carbon atoms, optionally interrupted with one or more heteroatoms, especially one or more heteroatoms chosen among oxygen, nitrogen, sulfur and/or phosphorous atoms,
• a saturated or unsaturated, aromatic or non-aromatic, heterocyclic or cyclic moiety,
- with at least one aldehyde having from 1 to 8 carbon, preferably from 1 to 4 carbon atoms.

2. Resin according to Claim 1, wherein, in said formula (I), X denotes a linear or branched, saturated or unsaturated, hydrocarbon group containing from 2 to 14 carbon atoms, more preferably from 3 to 12 carbon atoms, more preferably a linear or branched saturated hydrocarbon group containing from 2 to 14 carbon atoms, even more preferably from 3 to 12 carbon atoms.

3. Resin according to Claim 1 or Claim 2, wherein said 4-(2-alkoxyethyl)phenol compound is selected among the group consisting of:
| | |
|---|---|
| 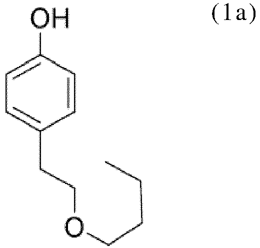 | 4-(2-butoxyethyl)phenol |
| 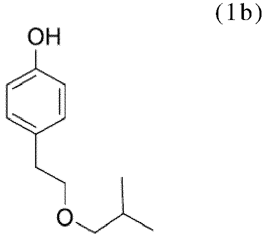 | 4-(2-isobutoxyethyl)phenol |
| 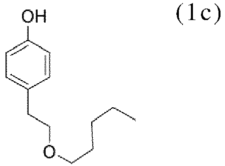 | 4-(2-(pentyloxy)ethyl)phenol |
| 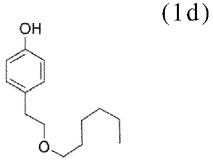 | 4-(2-hexyloxy)ethyl)phenol |
| 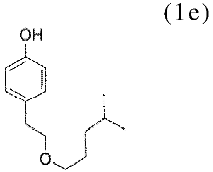 | 4-(2-((4-methylpentyl)oxy)ethyl)phenol |
| 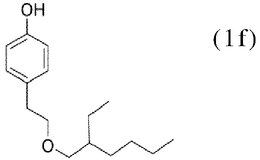 | 4-(2-((2-ethylhexyl)oxy)ethyl)phenol |
| 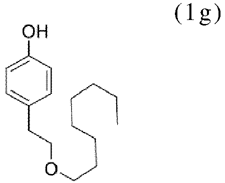 | 4-(2-(octyloxy)ethyl)phenol |
| 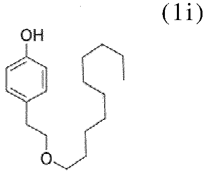 | 4-(2-(decyloxy)ethyl)phenol |
| 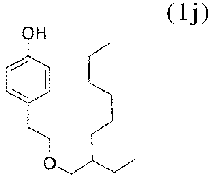 | 4-(2-((2-ethyloctyl)oxy)ethyl)phenol |
| 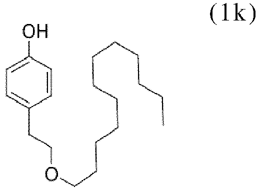 | 4-(2-(dodecyloxy)ethyl)phenol |
and mixtures thereof.

4. Resin according to any of the preceding claims, wherein said aldehyde contains from 1 to 4 carbon atoms, preferably said aldehyde is chosen among the group constituted of formaldehyde, acetaldehyde, propionaldehyde, butyraldehyde, 2-ethylhexanal, benzaldehyde and mixtures thereof, and more preferably said aldehyde is formaldehyde.

5. Resin according to any of the preceding claims, wherein said resin is a 4-(2-(alkoxy)ethyl)phenol formaldehyde resin having the following formula (II): 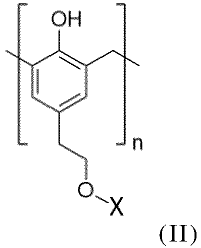 wherein X has the same meaning as in formula (I) and n is an integer ranging from 1 to 14.

6. Resin according to any of the preceding claims, wherein it is selected among the group consisting of
4-(2-butoxyethyl)phenol - formaldehyde resin,
4-(2-isobutoxyethyl)phenol - formaldehyde resin,
4-(2-((2-ethylhexyl)oxy)ethyl)phenol - formaldehyde resin,
4-(2-(hexyloxy)ethyl)phenol - formaldehyde resin,
4-(2-(octyloxy)ethyl)phenol - formaldehyde resin,
4-(2-(decyloxy)ethyl)phenol - formaldehyde resin,
4-(2-(dodecyloxy)ethyl)phenol - formaldehyde resin,
or mixtures thereof.

7. Resin according to any of the preceding claims, wherein said resin is obtainable by condensation of at least one 4-(2-(alkoxy)ethyl)phenol compound, as defined in any of claims 1 to 3, with at least one aldehyde having from 1 to 8 carbon atoms, as defined in any of claims 1 and 4, in the presence of at least one acidic catalyst

8. Use of at least one resin as defined in any of the preceding claims as an asphaltene inhibitor, especially in petroleum products.

9. An additive composition comprising at least one resin as defined in any of claims 1 to 7.

10. The composition as defined in Claim 9, wherein it further comprises one or more liquid organic solvent(s) chosen in the group constituted of:
- poly alkyl ethers, aliphatic hydrocarbons such as alkanes, aromatic solvents such as aromatic hydrocarbons and aromatic hetero-compounds,
- organic solvents derived from biomass, in particular oils of vegetable origin and more preferably cashew nutshell liquid,
- and mixtures thereof.

11. A petroleum product containing:
- a crude oil and/or at least one hydrocarbon fraction or at least one residue deriving from the distillation of a crude petroleum oil, and/or at least one bitumen; and
- an additive composition as defined in any of Claims 9 and 10.

12. Use of a composition as defined in any of Claims 9 and 10 as an additive in a petroleum product, preferably for preventing or reducing the precipitation of asphaltenes.

13. A method for preventing the precipitation of asphaltenes present in a petroleum product, comprising a step of adding to said product an additive composition as defined in any of Claims 9 and 10.

14. Use of at least one 4-(2-(alkoxy)ethyl)phenol compound as defined in any of claims 1 to 3, for the preparation of 4-(2-(alkoxy)ethyl)phenol resins as defined in any of claims 1 to 7.
